# EUROPÄISCHE PATENTSCHRIFT

(11) **EP 0 464 685 B1**
(45) Veröffentlichungstag und Bekanntmachung des Hinweises auf die Patenterteilung: **22.02.1995**
(21) Anmeldenummer: 91110682.1
(22) Anmeldetag: 27.06.1991
(51) Int. Cl.: G06K 7/08

(54) **Lesekopf**
Reading head
Tête de lecture

(30) Priorität: 04.07.1990 DE 4021241
(43) Veröffentlichungstag der Anmeldung: 08.01.1992
(73) Patentinhaber: ULTRAKUST electronic GmbH, 94239 Gotteszell (DE)
(72) Erfinder: Böhm, Alfred, W-8374 Viechtach (DE); Binder, Wilhelm, W-8391 Tiefenbach (DE)
(74) Vertreter: Heim, Hans-Karl, Dipl.-Ing.

(56) Entgegenhaltungen:
- DE-A- 2 705 439
- US-A- 4 141 494
- IBM TECHNICAL DISCLOSURE BULLETIN, Band 22, Nr. 8B, Januar 1980, Seite 3678,New York, US; G.F. PENNELL et al.: "Circular face flux extender"

## Beschreibung

Die Erfindung betrifft einen Lesekopf zum Lesen einer strich- oder stäbchenartigen, insbesondere passiv magnetischen Information auf einem Datenträger.

Ein Datenträger dieser Art ist beispielsweise in der DE 26 45 878 C2 beschrieben. Er weist beidseitig zwei Kodierungsspuren auf, von denen die eine die Informations- oder Codespur und die auf der anderen Seite gelegene die Synchronisations- oder Taktspur ist. Beide Spuren bestehen aus einzelnen länglichen Stäbchen, die voneinander etwa um den gleichen Abstand ihrer Breite angeordnet sind. Diese Stäbchen sind magnetisch leitend oder nichtleitend, so daß mit einem senkrecht zu den Stäbchen vorbeigeführten Lesekopf die darauf gespeicherte Information ausgelesen werden kann.

Für die bekannten Leseköpfe werden Feldplatten-Sensoren verwendet. Um einerseits ein sicheres Abtasten und Auslesen der Information zu gewährleisten, wird der Lesekopf sehr nahe an den kodierten Stäbchen vorbeigeführt, was jedoch mit einem relativ hohen Verschleiß oder Verkratzen verbunden ist. Dieser Nachteil führt andererseits dazu, daß der Grundwiderstand der Feldplatten undefinierbare Werte annimmt, wodurch Fehlerablesungen die Folge sind.

Weiterhin ist der physikalische und geometrische Aufbau des Lesekopfs noch so groß, daß bei einer leichten Schräghaltung des Lesekopfes im Vergleich zu der Ausrichtung der Kodierungsstäbchen der Feldplatten-Sensor zwei oder drei magnetische Kodierungen benachbarter Stäbchen erfaßt. Dies führt zu winkelabhängigen Auswertesignalen, da die Kodierung eines einzelnen Stäbchens nicht mehr mit Präzision erfaßt werden kann. Um derartige Fehler eliminieren zu können, bedarf es einer aufwendigen Auswerteschaltung, die sich jedoch für relativ einfache Massenprodukte verbietet.

Aus der DE 27 05 439 C2 ist ein Lesekopf gemäß dem Oberbegriff des Anspruchs 1 bekannt, der eine kreiszylindrische Leseöffnung aufweist und somit unanfällig ist gegen Winkelabweichungen vom Sollwinkel des Lesekopfes relativ zum Datenträger.

Dieser Lesekopf ist in seiner Verwendung darin eingeschränkt, daß er sich nur zum Lesen aktiv magnetisierter Informationsträger eignet. Aktiv magnetisierte Informationsträger sind hingegen störungsanfällig gegen magnetische Störfelder. Diese können beim Informationsträger zum Verlust der gespeicherten Information führen.

Der Erfindung liegt die **Aufgabe** zugrunde, einen gattungsgemäßen Lesekopf so zu verbessern, daß dieser eine gute Signalauswertung mit hoher Auflösung bei hoher Robustheit und winkelunabhängiger Führung gegenüber insbesondere passiv magnetisierten Kodierungsstäbchen erlaubt.

Diese Aufgabe wird bei einem gattungsgemäßen Lesekopf erfindungsgemäß durch die Merkmale des Anspruchs 1 gelöst. Vorteilhafte Weiterbildungen sind Gegenstand der Unteransprüche.

Der magnetische Fluß wird durch die erfindungsgemäße Ausbildung durch die Konifizierung der Leseöffnung stark gebündelt, wobei durch die magnetische Kopplung des Feldplattensensors über einen Dauermagneten mit dem Gehäusetopf ein relativ hohes Ausgangssignal erreicht wird. Der Lesekopf erlaubt das Lesen allein im magnetischen Widerstand enthaltener Information eines Datenträgers. Der Feldplatten-Sensor wird in einer Ausführungsform von der Stirnseite etwas zurückgesetzt, so daß er aus den Verschleißbereich herauskommt. Um jedoch eine hohe Empfindlichkeit im Hinblick auf Widerstandsänderungen in der Feldplatte zu erreichen, koppelt man zwischen der Leseöffnung, die sehr klein gehalten ist und nur etwas größer als die Breite eines Kodierungsstäbchens ist, einen magnetisch leitfähigen Leitstift, der sozusagen als Zentrierungs- oder Bündelungsstift angesehen werden kann. Mittels dieses Leitstifts wird die fiktive Umfangsfläche des Feldplatten-Sensor zur Stirnseite, also der Abtastseite hin, gebündelt und konzentriert. Die Sensorfläche wird daher zur Stirnseite hin sozusagen verkleinert, wobei jedoch hierdurch eine Anpassung an die Breite der Kodierungsstäbchen möglich ist. Ergänzend zu diesen Maßnahmen und der beabstandeten Anordnung des Feldplatten-Sensors gegenüber der Stirnfläche wird der gesamte Feldplatten-Sensor in einen magnetisch leitenden Gehäusetopf eingekapselt. Dieser Gehäusetopf läßt stirnseitig nur eine kleine Leseöffnung frei, in deren Mittelachse die Stirnfläche des Leitstifts zu liegen kommt.

Der Abstand zwischen dem Leitstift und dem Randbereich der Leseöffnung im Gehäusetopf ist so gehalten, daß im Falle eines genau vor der Leseöffnung zu liegenden kommenden Kodierungsstifts eine erfaßbare Widerstandsänderung aufgrund des geänderten, magnetischen Flußes vor sich geht, wobei dies im Vergleich zum unterbrochenen magnetischen Fluß bei nicht vorhandenem Kodierungsstift zu sehen ist. Der Leitstift weist vorteilhafterweise etwa T-Form, Stempel- oder Pilzform auf, wobei in Richtung zur Leseöffnung gesehen eine allmähliche Verjüngung bevorzugt wird, die im Gehäusebereich kegelstumpfförmig zur Stirnfläche zuläuft. Auf der Seite des Feldplattensensor findet eine Verbreiterung statt, um mindestens die Gesamtfläche des Feldplatten-Sensors abzudecken. Auf der abgewandten Seite zur Leseöffnung ist der Feldplatten-Sensor magnetisch mit einem Magneten, speziell einem Dauermagneten, verbunden. Dieser Dauermagnet steht mit dem magnetisch leitfähigem Boden des Gehäusetopfes in Verbindung, so daß durch den geringen magnetischen Widerstand auch eine hohe Empfindlichkeit im Bereich der Leseöffnung erreicht wird. Aus fertigungstechnischen Gründen ist der Gehäusetopf im Schnitt etwa U-förmig und rotationssymmetrisch gehalten, wobei in der Symmetrieachse die Leseöffnung vorgesehen ist. Auf der abgewandten Seite zur Leseöffnung wird der Gehäusetopf mit einem magnetisch leitfähigen Boden bzw. einer Materialplatte abgeschlossen, so daß ein gekapseltes Gehäuse entsteht.

Im Hinblick auf eine hohe Empfindlichkeit wird der gesamte Lesekopf mit seinen Baugruppen über Zentriereinrichtungen auf die Längsmittelachse, die durch den Mittelpunkt der Leseöffnung geht, zentriert. Diese Zentrierung gilt vor allen Dingen für den Leitstift, den Feldplatten-Sensor und die Leseöffnung.

Die im Inneren des Gehäusetopfes angeordneten Einzelkomponenten des Lesekopfes sind so konstruiert, daß die Sensoreinheit problemlos mit einer Vergußmasse, die magnetisch nicht leitend ist, vergossen werden kann. Mit dieser Maßnahme erreicht man hohe Temperaturstabilität, wobei auch ein Schutz vor Feuchtigkeit und eine Vibrationsunempfindlichkeit erreicht werden.

Um den Lesekopf winkelunabhängig zu konzipieren, d.h. Einflüsse, die aus einer Schrägstellung der gesamten Abtasteinrichtung im Vergleich zur Senkrechtstellung gegenüber den Kodierungsstäbchen zu vermeiden, wird der Durchmesser der Leseöffnung im Vergleich zum stirnseitigen Durchmesser des Leitstifts so gehalten, daß der Durchmesser des Leitstifts etwa der Breite eines Kodierungsstifts entspricht und der Durchmesser der Leseöffnung nur geringfügig über diese Breite des Kodierungsstifts hinausragt. Hiermit wird gewährleistet, daß magnetische Einflüsse durch benachbarte Kodierungsstifte sozusagen in der Stirnfläche des Lesekopfes ausgeschlossen werden und keinen Einfluß auf die Abtastung des Zentrierstifts nehmen können. Der Lesekopf wird hiermit winkelunabhängig und sozusagen rotationssymmetrisch, so daß Fehlereinflüsse durch die den Lesekopf handhabende Person weitestgehend ausgeschlossen werden können.

Für die Auswertung der magnetischen Kodierung wird bei dieser Auslegung des Lesekopfes ein Kurvenverlauf der Widerstandsänderung im Feldplatten-Sensor erreicht, der nahezu optimal verläuft und dabei winkelunabhängig und zeitunkritisch ist. Besonders zweckmäßig ist eine dem Feldplatten-Sensor nachgeschaltete elektronische Schaltung, die einen rechteckigen Impuls pro magnetisch leitendem Stäbchen, vorzugsweise als "open collector"-Ausgang bereitstellt. Bei dieser Impulscharakteristik ist auch eine Umwandlung in ein digitales Ausgangssignal vereinfacht.

Im Falle einer Code- und einer Synchronisationsspur ist es zweckmäßig, daß der mit zwei Leseköpfen ausgestattete Tastkopf im Hinblick auf die Zuordnung der Codespur zu einem bestimmten Lesekopf vertauschungssicher ausgelegt ist. Dies kann geeigneterweise mit einer unsymmetrischen Auslegung des Tastkopfes in Anpassung z.B. an unterschiedliche Breiten des Datenträgers oder Nummernblocks erfolgen, wie es die DE 26 45 878 C2 zeigt.

Im Hinblick auf die Auswertung der gelesenen Information ist es auch denkbar, daß die elektronische Auswertschaltung allein aufgrund der Sequenz der Information die Code- und Taktspur erkennt. Beispielsweise könnte die Codespur mit einem Kodierungsstift mehr ausgestattet sein, so daß in diesem Fall für die Taktspur magnetisch "0" gelesen wird.

Trotz Rückversetzung des Feldplatten-Sensors in den Gehäusetopf hinein erscheint es zweckmäßig, den Innenwiderstand des Feldplatten-Sensors selbst mitzuüberwachen, um bei Erreichen z.B. eines kritischen Schwellwertes, der eine Fehlfunktion anzeigt, eine Sperrung des Lesekopfes visuell oder akustisch anzuzeigen, so daß die Funktionsunfähigkeit für den Benutzer erkennbar wird.

Die Erfindung wird nachstehend schematisch anhand eines Ausführungsbeispiels noch näher erläutert. Es zeigen:
- Fig. 1: einen Axialschnitt durch den schematischen Aufbau eines Lesekopfes mit Kodierungsstift im Bereich der Stirnseite;
- Fig. 2: einen Schnitt vergleichbar zu Fig. 1, jedoch mit weiteren Details zu den Innenkomponenten des Lesekopfes;
- Fig. 3: eine Ansicht auf die Stirnseite eines Lesekopfes nach Fig. 2;
- Fig. 4: eine schematische Darstellung der Größenverhältnisse der Stirnseite des Lesekopfes und der Leseöffnung einschließlich Leitstift im Vergleich zu drei vorgesehenen Kodierungsstäbchen;
- Fig. 5: eine Axialschnitt-Darstellung durch einen Tastkopf mit zwei einander zugewandten achssymmetrisch angeordneten Leseköpfen, zwischen denen ein plattenartiger Datenträger vorgesehen ist;
- Fig. 6: eine Seitenansicht auf den Tastkopf nach Fig. 5 ohne Datenträger;
- Fig. 7: einen Axialschnitt durch einen Lesekopf ohne Kodierungsstift und
- Fig. 8: eine Aufsicht VIII auf die Stirnseite des Lesekopfes aus Fig. 7.

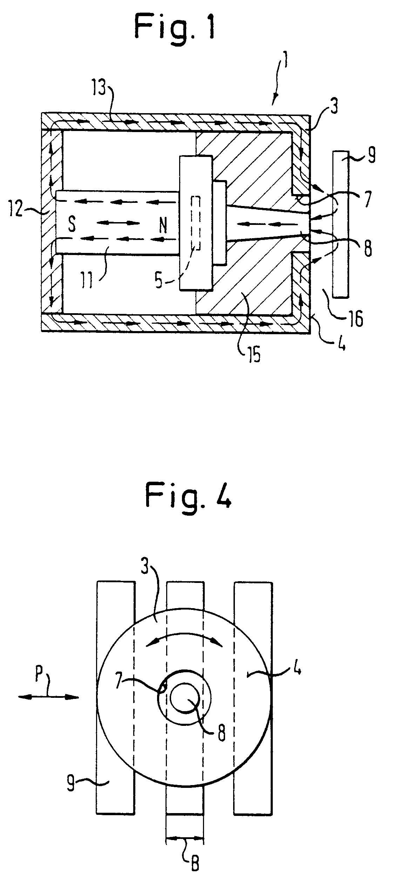

In Fig. 1 ist ein Lesekopf 1 im Axialschnitt mit seinen wesentlichen Komponenten dargestellt. Der Lesekopf weist einen äußeren magnetisch leitenden Gehäusetopf 3 auf, der in etwa U-Form hat und stirnseitig koaxial zu seiner Längsmittelachse eine Leseöffnung 7 aufweist. Auf der der Stirnseite 4 abgewandten Seite ist der Gehäusetopf 3 mit einer magnetisch leitenden Bodenplatte oder einem entsprechend leitfähigen Material abgeschlossen. Als innere Komponenten weist dieser Lesekopf 1 den von der Stirnseite nach innen zurückversetzten Feldplatten-Sensor 5 auf. Der Feldplatten-Sensor 5 steht mit der Leseöffnung über einen pilzförmigen Leitstift 8 magnetisch in Verbindung. Feldplatten-Sensor 5 und Leitstift 8 sind zur präzisen Ausrichtung auf die Längsachse des Lesekopfes mittels eines üblicherweise rotationssymmetrischen Zentrierkörpers 15 im Gehäusetopf angeordnet.

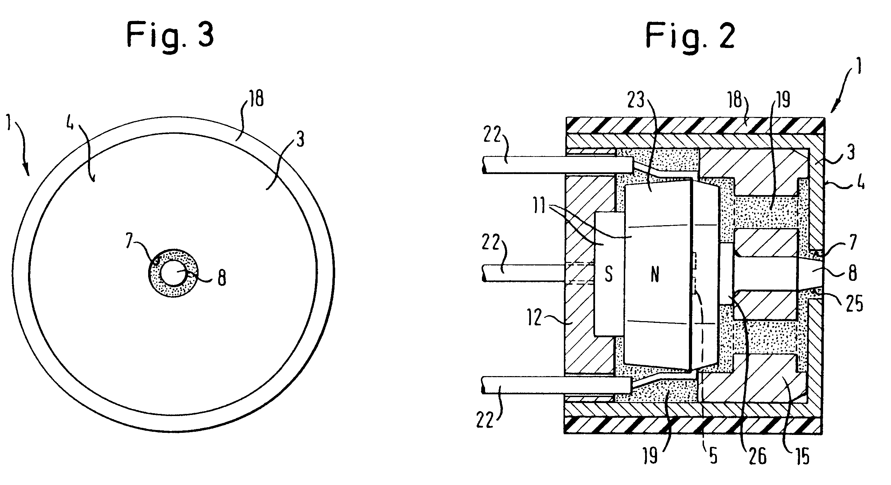

Auf der Rückseite des Feldplatten-Sensors 5 ist ein Magnet, insbesondere ein Dauermagnet 11, vorgesehen, der einen magnetischen Schluß zwischen der Bodenseite des Feldplattensensors 5 und dem Boden 12 des Gehäusetopfes 3 herstellt. Unter Einbeziehung der Schnittdarstellung nach Fig. 2, die eine genauere konstruktive Auslegung eines in der Fig. 1 schematisch dargestellten Lesekopfes 1 zeigt, wird erkennbar, daß die Stirnfläche des Zentrier- bzw. Leitstifts 8 flächenbündig mit der Stirnseite 4 des Gehäusetopfes 3 abschließt. Bei einem koaxialen Aufbau, wie er dargestellt ist, besteht zwischen der Stirnseite des Leitstifts 8 und dem Rand der Leseöffnung ein relativ kleiner, magnetisch isolierender Spalt, der üblicherweise mit Vergußmasse 19 gefüllt ist. Die Spaltbreite ist unter anderem anpaßbar an den Datenträger und die Empfindlichkeit, die für ein fehlerfreies Auslesen der Kodierungsinformation erforderlich ist.

Wie in Fig. 1 angedeutet, werden im dargestellten Fall, in dem sehr nahe an die Stirnfläche 4 des Lesekopfes 3 ein Kodierungsstäbchen 9 gelangt, die magnetischen Feldlinien 13 über dieses Kodierungsstäbchen 9 im Sinne einer Überbrükkung der Leseöffnung 7 zur Stirnseite des Leitstifts 8 geleitet. Der magnetische Widerstand des Gesamtkreises wird in diesem Fall wesentlich kleiner, so daß die Widerstandsänderung, die abhängig von der Magnetisierung unterschiedlicher Kodierungsstäbchen 9 ist, in einer nachgeschalteten (nicht gezeigten) elektronischen Schaltung als ausgelesene Information ausgewertet werden kann.

Die schematische Darstellung nach Fig. 1 zeigt, daß der T-, stempel- bzw. pilzförmige Leitstift in Richtung zur Leseöffnung konzentrierend bzw. verjüngend ausgebildet ist, während er am Feldplatten-Sensor in Art eines Anbringungssockels 26 (Fig. 2) kontaktiert ist. Dieser Kontaktsockel 26 gewährleistet sozusagen eine Aufweitung der magnetischen Feldlinien, damit diese über den Gesamtumfang des Feldplatten Sensors 5 detektiert werden können.

Ergänzend zu Fig. 1 ist in Fig. 2 der Zentrierkörper 15 so gestaltet, daß ein Vergießen der Komponenten des Feldplatten-Sensors, des Leitstifts 8, des Zentrierkörpers 15 und des Magnets 11 einschließlich eines Aufnahmekörpers 23 für den Feldplatten-Sensor 5 von der rückwärtigen Seite her mit Vergußmasse 19 folgen kann. Die Ausrichtung dieser Komponenten erfolgt streng achssymmetrisch bzw. koaxial zur Längsmittelachse. Hierbei weist der Zentrierkörper 15 vorteilhafterweise eine Einführungsöffnung für den Leitstift 8 und nach innen gesehen eine Einpassungsöffnung für den Feldplatten-Sensor 5 auf. Der Zentrierkörper 15 wird dabei geeigneterweise an den Innenflächen des Gehäusetopfes ausgerichtet und weist sowohl im Stirnbereich in Richtung zur Leseöffnung 7 als auch achsparallel Durchbrechungen auf, so daß die erhärtende und komponentenstabilisierende Vergußmasse in einem Fertigungsschritt eingebracht werden kann.

Zur weiteren Verbesserung ist der vorderste Bereich des Leitstifts 8 zur Stirnseite 4 hin mit seinem konischen Ende, das kegelstumpfförmig gestaltet ist, ausgelegt. Über diese Konifizierung läßt sich auch der magnetisch isolierende Spalt zwischen Leseöffnung und Leitstift konstruktiv sehr einfach verändern. Es bedürfte hierzu bei gleicher Gehäusetopf-Geometrie lediglich einer weiteren Abschrägung am stirnseitigen Ende des Leitstifts.

Am rückwärtigen Bereich des Feldplatten-Sensors 5 ist ein Dauermagnet im Beispiel mit seinem Nordpol gegen den Feldplatten-Sensor 5 angeordnet, während der Südpol in den plattenartigen Bodenabschluß 12 hineinragt, der magnetisch leitend ist. Selbstverständlich sind elektrische Anschlüsse 22 durch diese Bodenplatte 12 hindurchgeführt. An der radialen Umfangsseite ist z.B. der Gehäusetopf 3 mit einer Ummantelung 18 versehen, die in der Regel eine elektrische Abschirmung sicherstellt.

Die Darstellung in Fig. 3 zeigt eine Ansicht auf die Stirnfläche des rotationssymmetrisch aufgebauten Lesekopfes 1, wobei gleiche Bezugszeichen der Figuren gleiche Baugruppen betreffen.

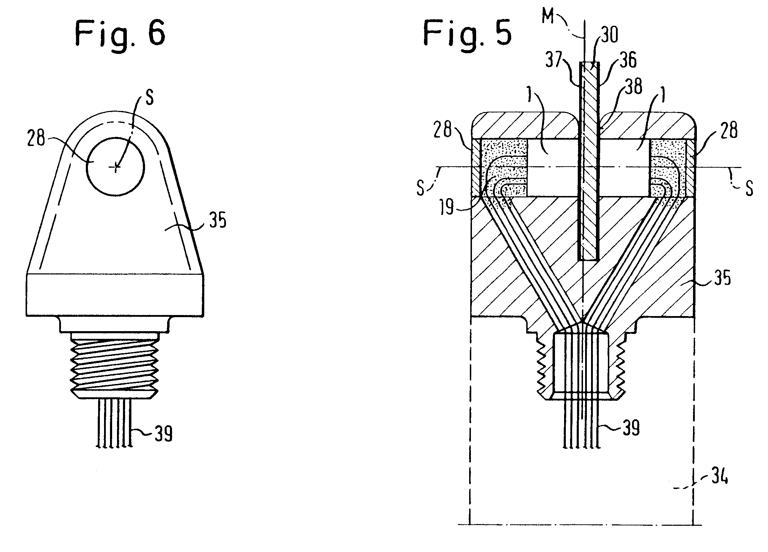

Eine Prinzipdarstellung der Lesefunktion ist in Fig. 4 gezeigt. Der Lesekopf 1 wird üblicherweise senkrecht zu benachbarten Kodierungsstiften 9 durch geometrische Auslegung des Datenträgers und des den Lesekopf oder mehrere Leseköpfe aufweisenden Tastkopfes bewegt. Die stirnseitige Fläche des Zentrierstifts 8 wird so gestaltet, daß deren Durchmesser etwa der Breite B eines Kodierungsstifts 9 entspricht, der aus einem magnetisch leitfähigem Material besteht, z.B. als Weichmagnet ausgebildet ist.

Der Durchmesser der Leseöffnung 7 ist dabei etwas größer ausgelegt als die Breite eines Kodierungsstifts 9. Auf diese Weise wird einerseits zentrierend der magnetische Fluß des gerade abgetasteten bzw. ausgelesenen Kodierungsstäbchens 9 in den Leitstift 8 geführt, während Störfelder benachbarter Kodierungsstäbchen durch die Stirnfläche 4 des Lesekopfes 3 sozusagen magnetisch kurzgeschlossen werden. Auf diese Weise kann der Lesekopf 1 als rotationssymmetrisch ausgebildet angesehen werden, so daß auch eine unterschiedliche Winkelneigung beim Abtasten, die durch einen Pfeil P angedeutet ist, keinen Einfluß auf den Informationsgehalt hat.

In der Darstellung nach Fig. 5 ist das Zusammenwirken zweier in der Symmetrieachse S ausgerichteter und gegenüberliegender Leseköpfe 1 in einem Tastkopf 35 in einem Schnitt längs der Mittelachse M dargestellt. Die Leseköpfe 1 sind dabei über einen Spalt beabstandet, der relativ paßgenau der Breite eines scheiben- oder plättchenartigen Datenträgers 30 entspricht. Dieser Datenträger 30 weist auf der linken Seite eine Codespur 37 und auf der rechten Seite eine Taktspur 36 in Form von Kodierungsstäbchen 9 auf. Diese Kodierungsstäbchen liegen daher im Beispiel parallel zur Mittelachse M auf bzw. in den Seitenflächen des Datenträgers 30. Der Abstandsspalt 38 zwischen den beiden Leseköpfen 1 ist geringfügig nach rechts versetzt. Mit anderen Worten ist die Breite senkrecht zur Mittelachse M des linken Bereichs etwas größer als die Breite des Tastkopfes 35 im rechten Bereich. Hiermit wird sichergestellt, daß ein falsches Einführen des Tastkopfes beim Ablesen des Datenträgers 30 unmöglich wird. In diesem Zusammenhang sei erwähnt, daß der Tastkopf selbst in seitlichen Führungen z.B. eines Nummernblocks gemäß der DE 26 45 878 C2 paßgenau geführt wird, so daß nur eine Ausrichtungsmöglichkeit zwischen Tastkopf und dem Datenträger 30 besteht. Hiermit ist gewährleistet, daß der linke Lesekopf 1 stets die Codespur abtastet, während der rechte Lesekopf allein die Taktspur 36 ausliest.

Die Leseköpfe 1 sind im Beispiel nach Fig. 5 im Tastkopf 35 in Bohrungen aufgenommen, die rückwärtig mit einer Vergußmasse 19 und einer Abschlußplatte 28 geschlossen sind. Entsprechende Leitungen 39 sind etwa im Bereich der Mittelachse M nach rückwärts in einen Handgriff 40 ausgeführt, der die Auswerteelektronik aufnimmt.

In Fig. 6 ist eine Ansicht auf die Seite des Tastkopfes 35 nach Fig. 5 gezeigt. Der Tastkopf ist im vorderen Bereich abgerundet gestaltet, so daß ein leichtes und sicheres Bewegen längs des Datenträgers möglich ist.

Die Erfindung gestattet daher ein sicheres, fehlerfreies Auslesen der Codeinformation, wobei Störeinflüsse durch benachbarte Kodierungen vermieden werden. Zudem wird die Beeinträchtigung durch Abrieb an dem Feldplatten-Sensor eliminiert und trotz allem eine optimale Empfindlichkeit durch die Zentrierungsmöglichkeit mittels eines Leitstifts erreicht. Der Lesekopf ist durch die eingesetzte Vergußmasse vibrationsstabil, wobei auch Temperaturänderungen und Feuchtigkeit keine merklichen Einflüsse auf die Lesegenauigkeit mit sich bringen.

Eine Vorwärts- wie Rückwärtsbewegung der gespeicherten Information ist daher bei dieser Auslegung des Lesekopfes und des entsprechenden Datenträgers jederzeit möglich.

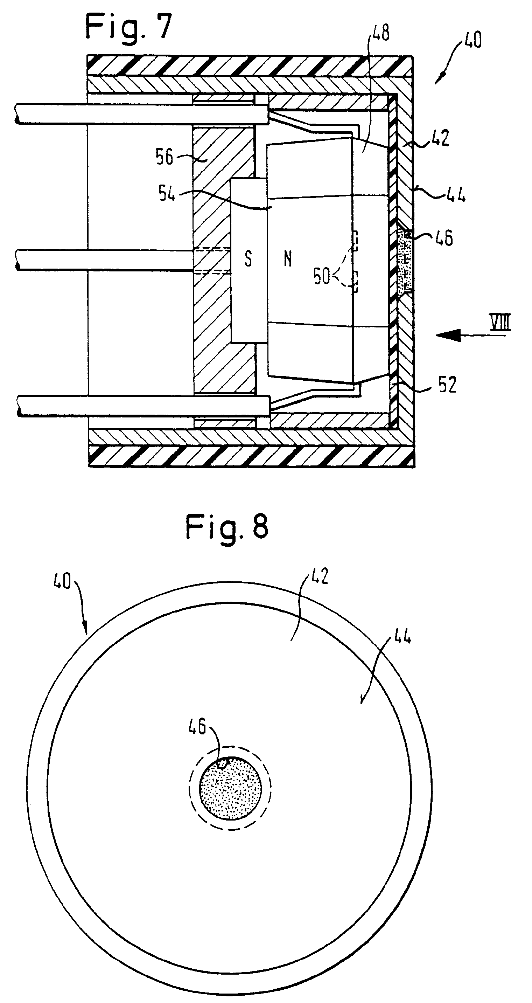

Der in Fig. 7 dargestellte Lesekopf 40 hat einen magnetisch leitenden Gehäusetopf 42, in dessen dem Datenträger zugewandten Stirnseite 44 eine kreisrunde Leseöffnung 46 angeordnet ist. Die Leseöffnung 46 ist konisch zur Stirnseite 44 zulaufend und ist mit magnetisch nicht leitfähigem Material, z.B. Hartlot, ausgefüllt. Der Träger 48 für die Feldplatten 50 ist durch eine Kunststoffolie 52 von der Leseöffnung 46 getrennt. Die Kunststoffolie 52 soll mechanische Schläge auf die Stirnseite 44 des Gehäusetopfes 42 abdämpfen und damit die Feldplatten 50 schonen. Die Feldplatten 50 sind über einen Dauermagneten 54 und dem Gehäuseboden 56 mit dem Gehäusetopf 42 magnetisch leitend verbunden. Auf diese Weise wird ein hohes Ausgangssignal erhalten. Durch die konifizierte Ausbildung der zirkularen Leseöffnung 46 wird eine scharfe Bündelung des Magnetflusses erreicht, der eine hohe Auflösung bezüglich einer auf einem Datenträger enthaltenen Information ermöglicht, die in der magnetischen Leitfähigkeit der Informationsträger auf dem Datenträger kodiert ist.

Fig. 8 zeigt die Aufsicht auf die Stirnseite 44 des Lesekopfes 40 mit der kreisrunden Leseöffnung 46, die mit Silberhartlot zugelötet ist. Die Konifizierung der Leseöffnung 46 wird durch eine Ansenkung der Stirnseite 44 des Gehäusetopfes 42 von der Rückseite des Gehäusetopfes her realisiert.

## Patentansprüche

1. Lesekopf zum Lesen einer strich- oder stäbchenartigen, insbesondere passiv magnetischen Information auf einem Datenträger wobei der Lesekopf in einem Gehäuse (3) mit einer dem Datenträger zugewandten stirnseitigen Leseöffnung angeordnet ist, mit mindestens einem Feldplattensensor und bei dem ein Danermagnet (11; 54; 56) stirnseitenabgewandt am Feldplattensensor mit magnetischem Schluß zum Gehäuse angeordnet ist,
dadurch **gekennzeichnet**,
daß die Leseöffnung (7; 46) zur Stirnseite (4; 44) des Lesekopfes (1; 40) hin konifiziert ausgebildet ist,
daß ein magnetisch leitfähiger Leitstift (8) in die Leseöffnung (7; 46) ragt, welcher stirnseitenabgewandt flächig mit dem Feldplattensensor (5; 50) kontaktiert ist,
daß der magnetisch leitfähige Leitstift (8) und der Feldplattensensor (5; 50) jeweils eine dem Datenträger (9) zugewandte stirnseitige Fläche haben, wobei die stirnseitige Fläche des Leitstiftes (8) kleiner ist als die stirnseitige Fläche des Feldplattensensors (5; 50).

2. Lesekopf nach Anspruch 1,
dadurch **gekennzeichnet**,
daß der Leitstift (8) T-förmig, pilz- oder stempelförmig gestaltet ist.

3. Lesekopf nach Anspruch 1 oder 2,
dadurch **gekennzeichnet**,
daß der Leitstift (8) eine stirnseitige Fläche hat, deren Durchmesser in etwa der Breite der Kodierungsstriche oder der Kodierungsstäbchen (9) des Datenträgers entspricht.

4. Lesekopf nach einem der Ansprüche 1 bis 3,
dadurch **gekennzeichnet**,
daß das Gehäuse als magnetisch leitender Gehäusetopf (3; 42) ausgebildet ist,
daß der Leitstift (8) zum Gehäusetopf (3; 42) magnetisch isoliert ist und
daß der Gehäusetopf (3; 42) magnetisch gekapselt den Feldplatten-Sensor (5; 50) aufnimmt.

5. Lesekopf nach Anspruch 4,
dadurch **gekennzeichnet**,
daß der Durchmesser oder die Breite der stirnseitigen Leseöffnung (7; 46) geringfügig größer ist als der Durchmesser oder die stirnseitige Breite des Leitstifts (8).

6. Lesekopf nach einem der vorhergehenden Ansprüche,
dadurch **gekennzeichnet**,
daß der Leitstift (8) im Bereich der Leseöffnung (7; 46) in Richtung zur Stirnseite (4; 44) verjüngt, insbesondere kegelstumpfartig ausgebildet ist.

7. Lesekopf nach einem der vorhergehenden Ansprüche,
dadurch **gekennzeichnet**,
daß der Gehäusetopf (3; 42) im Schnitt U-förmig ausgebildet ist und eine Vorderfläche mit einer planen Stirnseite (4; 44) aufweist, in welcher die Leseöffnung (7; 46) angeordnet ist, und
daß stirnseitenabgewandt ein magnetisch leitfähiges Material (12; 56) zum magnetischen Schluß zwischen dem Dauermagneten (11; 54; 56) und dem Gehäusetopf (3; 42) vorgesehen ist.

8. Lesekopf nach einem der vorhergehenden Ansprüche,
dadurch **gekennzeichnet**,
daß Gehäusetopf (3; 42), Leitstift (8) und Dauermagnet (11; 54; 56) koaxial zur Mittelachse des Feldplatten-Sensors (5; 50) und der Leseöffnung (7; 46) angeordnet sind.

9. Lesekopf nach einem der vorhergehenden Ansprüche,
dadurch **gekennzeichnet**,
daß der mindestens eine Feldplatten-Sensor (5; 50) im Gehäusetopf (3; 42) mittels einer Zentrier-Einrichtung (15) koaxial zur Leseöffnung (7; 46) angeordnet und mit einer magnetisch isolierenden Vergußmasse (19) vergossen ist.

10. Lesekopf nach einem der vorhergehenden Ansprüche, für einen scheiben- oder stegartigen Datenträger mit zweiseitiger, strich- oder stäbchenartiger, insbesondere passiv magnetischer Information,
dadurch **gekennzeichnet**,
daß zwei stirnseitig einander zugewandte Gehäusetöpfe mit achssymmetrischer Ausrichtung ihrer Leseöffnungen in einem Abstand von der Breite des Datenträgers (30) vorgesehen sind.

11. Lesekopf nach einem der vorhergehenden Ansprüche,
dadurch **gekennzeichnet**,
daß der Leitstift fixiert ist, wobei
die Relativbewegung zwischen Kodierungsstrichen oder Kodierungsstäbchen (9) auf dem Datenträger (30) und dem fixierten Leitstift im wesentlichen senkrecht zu benachbarten Kodierungsstrichen oder Kodierungsstäbchen (9) erfolgt.

12. Lesekopf nach einem der vorherigen Ansprüche,
dadurch **gekennzeichnet**,
daß der Leitstift (8) eine stirnseitige Fläche hat, die winkelunabhängig in Relation zur Information auf dem Datenträger (30) ausgelegt ist.

13. Lesekopf nach einem der vorhergehenden Ansprüche,
dadurch **gekennzeichnet**,
daß die Leseöffnung (7; 46) zumindest teilweise mit magnetisch nicht leitfähigem Material verschlossen ist.

14. Lesekopf nach Anspruch 13,
dadurch **gekennzeichnet**,
daß die Leseöffnung (46) mit Hartlot verschlossen ist.

15. Lesekopf nach einem der vorhergehenden Ansprüche,
dadurch **gekennzeichnet**,
daß zwischen dem Feldplattensensor (50) und der Leseöffnung (46) eine Schicht (52) zur mechanischen Dämpfung, insbesondere eine Kunststoffolie, angeordnet ist.

## Claims

1. A reading head for reading a bar-type, especially passive magnetic information on a data carrier, wherein the reading head is located in a casing (3) with a reading opening facing the data carrier in an end face of the reading head, with at least one field plate sensor and wherein a permanent magnet (11, 54, 56) is located on the field plate sensor on a side remote from the end face with a magnetic shunt to the casing (3),
**characterized** in that
the reading opening (7; 46) is tapered towards the end face (4; 44) of the reading head (1; 40),
that a magnetically conductive guide stylus (8) projects into the reading opening (7; 46) and is contacted flatly with the field plate sensor (5; 50) on the side remote from the end face,
the magnetically conductive guide stylus (8) and the field plate sensor (5; 50) each have a frontal surface facing the data carrier (9), wherein the frontal surface of the guide stylus (8) is smaller than the frontal surface of the field plate sensor (5; 50).

2. A reading head according to claim 1,
**characterized** in that
the guide stylus (8) is T-shaped, mushroom- or ram-shaped.

3. A reading head according to claim 1 or 2,
**characterized** in that
the guide stylus (8) has a frontal surface, whose diameter roughly corresponds to the width of the bar-type magnetic information (9) on the data carrier.

4. A reading head according to any of the claims 1 to 3,
**characterized** in that
the casing is constructed as a magnetically conductive casing pot (3; 42),
that the guide stylus (8) is magnetically insulated with respect to the casing pot (3; 42) and
the casing pot (3; 42) receives the field plate sensor (5; 50) in magnetically encapsulated manner.

5. A reading head according to claim 4,
**characterized** in that
the diameter or the width of the frontal reading opening 7; 46) is slightly larger than the diameter or the frontal width of the guide stylus (8).

6. A reading head according to any of the preceding claims,
**characterized** in that
the guide stylus (8) is tapered, particularly in frustum-shaped manner, towards the end face (4; 44) in the vicinity of the reading opening (7; 46).

7. A reading head according to any of the preceding claims,
**characterized** in that
the casing pot (3; 42) is U-shaped in cross-section and has a front surface with a planar end face (4; 44), in which the reading opening (7, 46) is located, and on the side remote from the end face a magnetically conductive material (12; 56) is provided for the magnetic shunt between the permanent magnet (11; 54; 56) and the casing pot (3, 42).

8. A reading head according to any of the preceding claims,
**characterized** in that
the casing pot (3; 42), the guide stylus (8) and the permanent magnet (11; 54; 56) are postitioned coaxially to the centre axis of the field plate sensor (5; 50) and the reading opening (7; 46).

9. A reading head according to any of the preceding claims,
**characterized** in that
at least one field plate sensor (5; 50) is coaxially arranged to the reading opening (7; 46) in the casing pot (3; 42) by means of a centring device (15) and is sealed with a magnetically insulating sealing compound (19).

10. A reading head according to any of the preceding claims for a disk- or web-like data carrier with two-sided bar-type, especially passive magnetic information,
**characterized** in that
two frontally facing casing pots with an axially symmetrical orientation of their reading openings are provided having a spacing which is the same as the width of the data carrier (30).

11. A reading head according to any of the preceding claims,
**characterized** in that
the guide stylus is fixed, wherein the relative movement between the bar-type magnetic information (9) on the data carrier (30) and the fixed guide stylus takes place substantially perpendicular to adjacent bar codes (9).

12. A reading head according to any of the preceding claims,
**characterized** in that
the guide stylus (8) has a frontal surface, which is angle-independent relative to the information on the data carrier (30).

13. A reading head according to any of the preceding claims,
**characterized** in that
the reading opening (7; 46) is at least partly sealed with a magnetically non-conductive material.

14. A reading head according to claim 13,
**characterized** in that
the reading opening (46) is sealed with a hard solder.

15. A reading head according to one of the preceding claims,
**characterized** in that
a layer (52) for a mechanical damping, especially a plastic sheet, is positioned between the field plate sensor (50) and the reading opening (46).

## Revendications

1. Tête de lecture pour lire une information sous forme de traits ou de barres, en particulier une information magnétique passive sur un support de données, la tête de lecture étant disposée dans un boîtier (3) avec une ouverture de lecture frontale tournée vers le support de données, avec au moins un détecteur à magnétorésistance, et dans laquelle un aimant permanent (11 ; 54 ; 56) est disposé, du côté opposé à la face frontale du détecteur à magnétorésistance, en contact magnétique avec le boîtier, ***caractérisée en ce que*** l'ouverture de lecture (7 ; 46) est constituée sous forme conique en direction de la face frontale (4 ; 44) de la tête de lecture (1 ; 40), ***en ce qu'***un ergot conducteur magnétique (8) dépasse dans l'ouverture de lecture (7 ; 46), lequel, du côté opposé à sa face frontale, est en contact plat avec le détecteur à magnétorésistance (5 ; 50), ***en ce que*** l'ergot conducteur magnétique (8) et le détecteur à magnétorésistance (5 ; 50) ont chacun une surface frontale tournée vers le support de données (9), la surface frontale de l'ergot conducteur (8) étant plus petite que la surface frontale du détecteur à magnétorésistance (5 ; 50).

2. Tête de lecture selon la Revendication 1, ***caractérisée en ce que*** l'ergot conducteur (8) est en forme de T, de champignon ou de tampon.

3. Tête de lecture selon la Revendication 1 ou 2, ***caractérisé en ce*** ***que*** l'ergot conducteur (8) a une surface frontale dont le diamètre correspond approximativement à la largeur des traits de codage ou des barres de codage (9) du support de données.

4. Tête de lecture selon l'une des Revendications 1 à 3, ***caractérisée*** ***en ce que*** le boîtier est constitué d'un pot formant boîtier conducteur magnétique (3 ; 42), ***en ce que*** l'ergot conducteur (8) est isolé magnétiquement du pot formant boîtier (3 ; 42) et ***en ce que*** le pot formant boîtier (3 ; 42) reçoit le détecteur à magnétorésistance (5 ; 50) de façon étanche du point de vue magnétique.

5. Tête de lecture selon la Revendication 4, ***caractérisée en ce que*** le diamètre ou la largeur de l'ouverture de lecture frontale (7 ; 46) est légèrement plus grand(e) que le diamètre ou la largeur frontale de l'ergot conducteur (8).

6. Tête de lecture selon l'une des Revendications précédentes, ***caractérisée en ce que*** l'ergot conducteur (8) est effilé au niveau de l'ouverture de lecture (7 ; 46) dans la direction de la face frontale (4 ; 44), en particulier présente une forme en cône tronqué.

7. Tête de lecture selon l'une des Revendications précédentes, ***caractérisée en ce que*** le pot formant boîtier (3 ; 42) présente une forme en U en coupe et présente une surface avant avec une face frontale plane (4 ; 44), dans laquelle est disposée l'ouverture de lecture (7 ; 46), et ***en ce*** ***que***, du côté opposé à la face frontale, un matériau conducteur magnétique (12 ; 56) est prévu pour le contact magnétique entre l'aimant permanent (11 ; 54 ; 56) et le pot formant boîtier (3 ; 42).

8. Tête de lecture selon l'une des Revendications précédentes, ***caractérisée en ce que*** le pot formant boîtier (3 ; 42), l'ergot conducteur (8) et l'aimant permanent (11 ; 54 ; 56) sont disposés de manière coaxiale par rapport à l'axe médian du détecteur à magnétorésistance (5 ; 50) et à l'ouverture de lecture (7 ; 46).

9. Tête de lecture selon l'une des Revendications précédentes, ***caractérisée en ce que*** le au moins un détecteur à magnétorésistance (5 ; 50) est disposé dans le pot formant boîtier (3 ; 42), au moyen d'un dispositif de centrage (15), de manière coaxiale à l'ouverture de lecture (7 ; 46), et est scellé avec une masse de remplissage isolante magnétique (19).

10. Tête de lecture selon l'une des Revendications précédentes. pour un support de données de type disque ou barrette avec une information sous forme de traits ou de barres des deux côtés, en particulier une information magnétique passive, ***caractérisée en ce que*** deux pots formant boîtiers se faisant face avec leurs faces frontales, avec orientation symétrique par rapport à une droite de leurs ouvertures de lecture, sont prevus à une distance de la largeur du support de données (30).

11. Tête de lecture selon l'une des Revendications précédentes, ***caractérisée en ce que*** l'ergot conducteur est fixe, le mouvement relatif entre les traits de codage ou barres de codage (9) sur le support de données (30) et l'ergot conducteur fixe se faisant pour l'essentiel perpendiculairement aux traits de codage voisins ou barres de codage voisines (9).

12. Tête de lecture selon l'une des Revendications précédentes, ***caractérisée en ce que*** l'ergot conducteur (8) a une surface frontale qui est conçue pour être indépendante de l'angle par rapport à l'information sur le support de données (30).

13. Tête de lecture selon l'une des Revendications précédentes, ***cacaractérisée en ce que*** l'ouverture de lecture (7 ; 46) est au moins partiellement fermée avec un matériau non conducteur magnétique.

14. Tête de lecture selon la Revendication 13, ***caractérisée en ce*** ***que*** l'ouverture de lecture (46) est fermée par du métal d'apport de brasage fort.

15. Tête de lecture selon l'une des Revendications précédentes, ***caracterisée en ce qu***'entre le détecteur à magnétorésistance (50) et l'ouverture de lecture (46), est disposée une couche (52) pour l'amortissement mécanique, en particulier une feuille de matière synthétique.
